# EUROPEAN PATENT APPLICATION

(11) **EP 1 632 890 A1**
(43) Date of publication of application: **08.03.2006**
(21) Application number: 04020847.2
(22) Date of filing: 02.09.2004
(51) Int. Cl.: G06Q 10/00

(54) **A computer implemented method and a computer system for decoupling the execution of an action from its trigger event**

(71) Applicant: SAP AG, 69190 Walldorf (DE)
(72) Inventor: The designation of the inventor has not yet been filed
(74) Representative: Hössle Kudlek & Partner

(57) **Abstract**

The present invention refers to a computer implemented method for executing at least one action in response to the content of a data object corresponding to a fulfillment level of an event or incident triggering the at least one action, wherein the at least one action to be executed is decoupled from the event or incident and is determined on the basis of the fulfillment level of the event or incident and wherein in case that the fulfillment level corresponds to at least one predefined variable fulfillment level, the action is executed according to a predefined execution plan object schedule.

## Description

### Field of the invention

The present invention relates to the field of executing actions on the basis of the content of a data object, the content of the data object corresponding to a fulfillment level of at least one event or incident. Particularly, the present invention relates to a computer system and computer implemented method for executing at least one action in response to the content of a data object corresponding to a fulfillment level of at least one event or incident triggering the at least one action. The invention further relates to a computer program product with a computer-readable medium and a computer program stored on the computer-readable medium with program coding means which are suitable for carrying out such a method when the computer program is run on a computer.

### Description of the Related Art

There are many areas in which actions to be executed are controlled by a computer system by means of a computer implemented method. One of these areas, e.g., is in the field of commission payments, i.e. remuneration payments to employees or agents within the framework of a compensation plan. The background of the invention and the problems underlying the invention will now be explained with regard to the field of commission payments. However, it will be understood that the same principals can be found in other areas too, e.g. shipment of goods, control of a manufacturing line etc.

Managing employee compensation plans has traditionally been done manually on spreadsheets or in-house developed applications. For a large organisation, compensation plans are typically complex and involve rewards like commissions, bonuses, splits, accelerators, draws, caps, and are notoriously difficult to maintain and manage accurately. Target agreements, also called objective agreements, play an important role in modern stuff management in conjunction with assessment systems. As a rule, target agreements are used within the framework of a consultation, promotion or annual interview, in which the senior person works together with an employee or colleague to set qualitative and quantitative goals which will be looked at on a one-off basis or at regular intervals, generally at yearly or half-yearly intervals, but according to recent experience at more frequent intervals, to check the extent to which the goals have been achieved. In the case of performance related pay, an incentive payment will be made depending on the target achieved. Obviously, this principle can also be applied to agreements between a client and a contractor, e.g. with a contractor acting on the basis of a consultancy agreement or the like.

There are already computer programs in existence for the computer-aided management and calculation of commission on the basis of input target amounts. In the known computer programs, the remuneration payments to an employee or agent are effected, i.e. executed, when a commission case occurs, the occurrence of a commission case is input in an according data object which thus contains a description of the commission case. The commission case is an event or incident triggering a certain action, which in the example on hand is a remuneration payment. After valuation of the commission case on the basis of the individual target or commission agreement and the degree the agreement was fulfilled, the system then triggers the payment of the commission to the employee's or agent's account. This means the known system merely automatically perform the steps which had previously been done on paper. However, there exists a need for a more accurate commission payment system taking into account various conditions and pre-requisites which influence the flow of action in a commission payment system. For example, the known systems can not take into consideration that commission payment can depend on certain release rules. At the moment, it is known that a commission payment is executed with the current release that allows time-restricted release rules, obtaining the required information from a second application.

### Summary of the Invention

It is therefore an object of the invention to provide a system and a method for executing at least one action in a more flexible and reliable manner. A further object of the invention is to provide for the possibility of generating release rules in addition to the time-restricted condition for the at least one action to be executed. These objects are achieved by proposing a computer implementing method for executing at least one action with the features of claim 1 and a computer system with the features of claim 6.

Accordingly, the at least one action to be executed is decoupled from the at least one event or incident and determined on the basis of the fulfillment level of the event or incident. In case that the fulfillment level corresponds to at least one predefined variable fulfillment level, the action is executed according to a predefined execution plan object schedule. The invention thus provides for the possibility of generating individual predefined variable fulfillment levels with regard to individual conditions of the event or incident as a basis trigger of the action to be executed. In addition to a time-restricted condition, e.g. "do-not-settle-before-date-X", further release rules, namely fulfillment levels, can be defined. According to the invention, settlement schedule items with additional release rules can only be processed in the settlement schedule run when the release rule has been fulfilled. The invention provides a complementary service, for example the release of a partial commission after receipt of all customer payment for a specified period. According to the present invention, it is possible now to define fulfillment levels for example as threshold values that have to be met for the settlement to be carried out. It is possible to avoid with help of the present invention overhead expenses such as postage or bank transfer costs for minimum amounts.

The invention also covers a computer program with program coding means which are suitable for carrying out a method according to the invention as described above when the computer program is run on a computer. The computer program itself as well as stored on a computer-readable medium is claimed.

Another area, in which actions to be executed are controlled by a computer system by means of a computer implemented method is in the field of shipment of goods, to which the present invention can also be applied. Within this field, it is conceivable to subject the goods to a quality control before delivery. Not until before the test result corresponds to a predefined value, namely a predefined fulfillment level of quality, the goods are released for delivery.

Further features and embodiments of the invention will become apparent from the description and the accompanying drawing.

It will be understood that the features mentioned above and those described hereinafter can be used not only in the combination specified but also in other combinations or on their own, without departing from the scope of the present invention.

The invention is schematically illustrated in the drawing by means of an embodiment by way of example and is explained in detail with reference to the drawing. It is understood that the description is in no way limiting on the scope of the present invention and is merely an illustration of a preferred embodiment of the invention.

### Brief description of the Drawing

In the drawing,

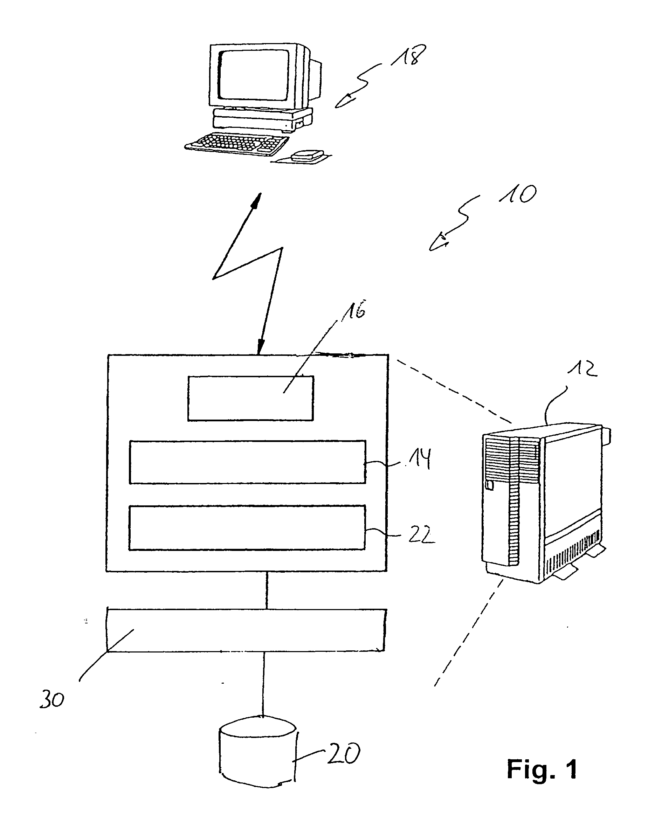

Figure 1 is a schematic view of a computer system according to the invention.

### Detailed Description

Figure 1 shows a schematic block diagram representation of a scheduling system 10 according to the present invention. The computer scheduling system 10 for executing at least one action comprises a computing unit 12 with a central processing unit CPU, a network connection 16 for connection with at least one input/output means 18 and at least one database means or object component 20 containing data objects describing an event or incident triggering at least one action to be executed. The computer scheduling system further comprises an execution plan module 22 for generating an execution plan object on the basis of a determination of the at least one action, as well as an execution module 14 for executing the at least one action to be executed according to the execution plan object module. The system further comprises an additional server 30, located between the execution plan module 22 and the data means or object component 20. This additional server 30 contains a list providing predefined release rules. The action to be executed by the execution module 14 can only be processed when a specific release rule according to the list associated with the action has been fulfilled. Release types are defined if the conversion of settlement schedule items should be linked to the occurrence of certain, mainly period-based events or incidents. Release types and rules define the conditions that apply for the settlement schedule item. It is also possible to define certain tolerance limits for the release.

In the embodiment to be described hereinafter, the action to be executed is a remuneration payment in result of a commission case, the data objects being commission contract between two parties containing an individual payment plan agreement. However, it will be obvious to any person skilled in the art that the principles of the present invention are not limited to the embodiment described herein but rather do apply to various fields in business, commerce, industry, manufacture, etc. in which an individual action is triggered by an event (such as payment, delivery, contract fullfilment, or even accident) and a time schedule for executing such action is created.

The database means or object component 20 containing in the commission case described herein a record regarding a premium due, i.e. monthly insurance premium with regard to an insurance policy in order to collect this from the policyholder. The execution plan module 22 contains a record with all the commission-related information. The execution plan module 22 calculates all the required commissions based on this information with regard to the underlying business. If the policyholder has paid the premium due then database means or object component 20 receives the incoming payment and can use a functionality to determine which underlying business the premium belongs. Then a notification about the paid premium is given to server 30 which could send a trigger to the execution plan module to inform this module that the premium for the underlying business has been paid. If the execution plan module 22 has received the external trigger from server 30, then it could release the payment for the commission amounts which belong to the underlying business.

A release rule of a settlement schedule item is generally determined by an individual agreement for settlement release, whose set of rules are defined by a standard agreement for settlement release. Settlement schedule items with additional release rules lodged within the list of the additional server 30 can only processed in the settlement schedule run when the release rule has been fulfilled.

With the interconnection of the additional server 30, it is possible for example to allow time-restricted release rules, obtaining the required information from a second application. An imaginable scenario would be for example a release of partial commission after receipt of all customer payments for a specified period. However, as already pointed out, the principles of the invention apply to other fields too in which an action to be taken is triggered by an incident.

In the embodiment on hand, the incident is a so-called commission case and the action that is triggered by the commission case is the settlement of a remuneration of a given sum according to a commission contract.

Within the list provided by the additional server 30 it is possible to define and store threshold values that have to be met for a settlement to be carried out. Therefore, it is possible to avoid overhead expenses, such a postage or bank transfer costs, for minimum amounts. However, one can opt to ignore the threshold values in the settlement.

Release types are defined if it is wished to link a conversion of settlement schedule items to the occurrence of certain, mainly period-based events. Release types and rules define the conditions that apply for the settlement schedule item.

Standard agreements for settlement release serve as templates for creating individual settlement release agreements in commission contracts. Each standard contract can only be assigned one standard agreement for settlement release. Release rules are assigned to the standard agreement; these rules are defaulted when the commission contracts assigned to the standard contract is processed. It is possible to create additionally fulfillment level headers. Before a settlement is released, the fulfillment level information is checked within the additional server 30.

The server 30 contains storage means to store for example the payment of several complete premium slices payment. Only if the sum of the premium slices payment achieve a predefined threshold corresponding to a fulfillment level, which could be dependent on the quantity of the premium payments as well as the total sum of paid premium in a considered period, a commission payment is automatically released. It is possible to define a period against which fulfillment notifications are cleared. Each settlement schedule item is assigned a release status as for example "waiting for release". In case that database means or object component 20 containing data objects describing an event or incident triggering the action to be executed transfers action information, it is checked within server 30 whether the fulfillment level is reached. Furthermore the release status of actual commission must be "released". When both conditions are fulfilled server 30 provokes the commission payment to be released by the execution plan module 22.

The fulfillment levels which have to be reached can be dependent on several different units. It can depend on a quantitive unit, for example on a certain premium payment which have to be paid by a policyholder. Furthermore, it can be time dependent, as for example a premium payment paid by a policyholder within a specific time period.

In case of a premium per year payable in 12 monthly payments, different scenarios are possible. If the premium due on a certain date is paid completely by the policyholder, then the commission due this month should be paid to the agent. This would correspond to a synchronous commission payment. Another possibility would be that the commission of the full year should be paid to the agent only if all premium payments of the year are paid by the policyholder. This can be called an asynchronous commission payment. Further, it can be defined that the commission of the full year should be paid to the agent only if the first premium payment of the year has been paid by the policyholder. This is also an asynchronous commission payment. Another example for an asynchronous commission payment is described when a commission payment is released after payment of several complete premium slices payment after achievement of a threshold. This threshold could be dependent on the quantity of the premium payments as well as the total sum of paid premium in a certain considered period.

All payment slices not yet triggering the commission to be released are stored within the storage means of server 30 and added up successively until a predefined fulfillment level is reached and finally triggering the commission to be paid to the agent. Afterwards all entries within the storage means associated with this commission payment are erased.

## Claims

1. A computer implemented method for executing at least one action in response to the content of a data object corresponding to a fulfillment level of at least one event or incident triggering the at least one action, wherein the at least one action to be executed is decoupled from the at least one event or incident and is determined on the basis of the fulfillment level of the at least one event or incident and wherein in case that the fulfillment level corresponds to at least one predefined variable fulfillment level, the action is executed according to a predefined execution plan object schedule.

2. Method according to claim 1, wherein the predefined variable fulfillment level is time-dependent.

3. Method according to claim 1, wherein the predefined variable fulfillment level corresponds to predefined parts of the event for incident.

4. Method according to one of the preceding claims, wherein the predefined variable fulfillment level is defined on the basis of a given quality of the event or incident or of at least one part of one of these.

5. Method according to one of the preceding claims, wherein the incident is a commission case and wherein the action to be executed is a commission payment, the commission payment being effected on the basis of the fulfillment level of the commission case.

6. A computer system for executing at least one action, comprising a computing unit; and
a data object component for managing a set of data objects, the data objects of the set of data objects containing a description of a fulfillment level of an event or incident triggering at least one action to be executed;
a comparing and administrating unit for comparing a fulfillment level with one or more fulfillment levels predefined within the comparing unit, the predefined fulfillment levels containing a description of release types and rules defining conditions that apply for execution of the action;
further comprising an execution plan module for generating an execution plan object on the basis of a determination of the at least one action, the execution plan object comprising a schedule of the execution of the at least one action; and
an execution module for executing the at least one action to be executed according to the execution plan object schedule.

7. A computer program product with a computer-readable medium and computer program stored on the computer-readable medium with program code means which is suitable for carrying out a method according to any one of claims 1 to 5 when the computer program is run on a computer.

8. A computer program with program code which is suitable for carrying out a method according to any one of claims 1 to 5 when the computer program is run on a computer.

9. A computer-readable medium with a computer program stored thereon, the computer program comprising a program code which is suitable for carrying out a method according to any one of claims 1 to 5 when the computer program is run on a computer.
